# EUROPEAN PATENT APPLICATION

(11) **EP 4 166 049 A1**
(43) Date of publication of application: **19.04.2023**
(21) Application number: 21203141.3
(22) Date of filing: 18.10.2021
(51) Int. Cl.: A47J 31/42

(54) **COFFEE MACHINE WITH BEANS CONTAINER MODULE**

(71) Applicant: BSH Hausgeräte GmbH, 81739 München (DE)
(72) Inventor: Golicnik, Matjaz, 3332 Recica (SI); Koch, Franz, 83454 Anger (DE); Lemez, Samo, 3327 Smartno ob Paki (SI); Ogrizek, Bostjan, 3320 Velenje (SI); Semprimoznik, Ales, 3330 Mozirje (SI)

(57) **Abstract**

A coffee machine having a coffee beans container module comprising: a housing with a spring path and a coffee beans container with an aperture, an aperture cover and a spring, whereby the spring path has an opening and the coffee beans container has a plough geometry for removing obstacles from the spring path.

The present invention enables a coffee machine with a coffee beans container module in which the operation of the removable coffee beans container is performed smoothly and in which the risk of malfunction is decreased. The solution provides also a positive user impression that the coffee beans container is firmly positioned in the housing.

## Description

The present invention relates to a coffee machine, especially a built-in coffee machine having a coffee beans container module comprising a housing with a housing aperture and a spring path and with a coffee beans container with an aperture, an aperture cover and a spring.

The built-in type coffee machines are known form the state of the art. In this type of the coffee machines the front panel opens towards the user for the service purpose. After opening the front panel of the coffee machine the consumer gets the access to the internal modules of the device like coffee beans container, water tank or brewing unit modules. The coffee beans container is a drawer shape. To fill the container it has to be removed from the coffee machine. Upon insertion of the container the device is ready to brew a beverage. The presence and status of ground coffee drawer is often monitored by a micro switch.

The patent application EP 2 878 240 A1 discloses a fully automatic coffee machine for household purposes, having a housing and a storage container removable therefrom for coffee beans, which can be moved on an actuating path, having a grinder for coffee beans, having a discharge opening of the storage container for the supply of the beans to the grinder and having a closure device for closing the discharge opening with a door, which when the storage container is moved can be adjusted between an open position to release the discharge opening and a closed position to close the discharge opening, wherein the door can be moved by manual movement of the storage container without pretensioning between the open position and the closed position, having a stop on the housing of the fully automatic coffee machine, which stands transversely to the actuating path and, when a storage container is inserted, is in touching contact with the door and can be moved from a locking position out of the actuating path into a release position, wherein a pivotable latching lug as a stop which, when a storage container is inserted, engages in a locking manner in the direction of the actuating path of the door on an edge of the door, or a pivotable rib surface as a stop, the ribs of which run transversely to the actuating path and into which, when a storage container is inserted, a rib on the door engages.

The patent document EP 2 664 259 A1 discloses a brewed beverage appliance, comprising a reservoir for housing a liquid, a grinding mechanism, a grinding platform having a grinding cavity, wherein said grinding platform is moving from a first grinding position in which said grinding mechanism is not disposed within said grinding cavity, to a second grinding position in which said grinding mechanism is disposed within said grinding cavity. The brewed beverage appliance according to the invention further comprises a control circuit for selectively causing said grinding mechanism to operate when in said second grinding position and a pump, wherein said pump is selectively pumping said liquid from said reservoir to said grinding cavity after said grinding mechanism has operated within said grinding cavity. The invention further relates to a system of said brewed beverage appliance.

It is the object of the present invention to provide a further development with an advantage over the state of the art.

A further object of the invention is to provide a coffee machine beans container module of extended lifetime.

Another object of the present invention is to provide a coffee beans container module with a beans container which automatically removes obstacles from the spring path so decreases the probability of malfunction of the coffee machine.

This object is solved by a coffee machine with a beans container module whereby the spring path has an opening. The coffee beans container has a plough geometry for removing obstacles from the spring path.

The coffee beans container module comprises a housing and a container for storing the coffee beans. The housing has a spring path. The coffee beans container has an aperture, an aperture cover and a spring.

The coffee machine is a built-in type coffee machine. The coffee beans container module consist of a housing and the container. The housing is a part of the coffee machine. The container is a removable part of the coffee beans container module. The container has a spring which slides on the spring path. Spring path is a simple guide which is placed on the housing. The container has a plough geometry for removing obstacles for the spring path. The plough geometry is a simple protrusion which is placed before the spring and cleans the spring path so the spring can slides on the spring path smoothly. The purpose of the plough geometry is to remove obstacles like coffee beans or other contaminations from the spring path in order to provide better functioning of the spring.

In the preferred embodiment of the invention the spring path has a spring seating which is placed at the end of the spring path for receiving the spring of the container in its mounted position. The mounted position means the position when the container is inserted into the housing and the brewing process can start. The spring seating is a simple cavity for receiving the spring. The spring path has an opening. The opening is placed in the spring seating at the end of the spring path. During the inserting the container, the spring starts to slide on the spring path and at the end of the spring path the spring falls into the spring seating with the opening and provides effective and firmly positioning of the container inside the housing. The positive effect of such solution is a positive consumer impression that the container is well positioned in the housing.

The opening is placed at the end of the spring path. Through the opening the obstacles e.g. coffee beans or dirt from the spring path can fall away. When the spring path is free of obstacles the mounting process of the beans container into the housing is smooth, easy and convenient for the user. In the end position of the container the spring falls into the spring seating and the opening and the container is firmly mounted into the housing.

The coffee beans container has an aperture and an aperture cover. The aperture is provided to enable the coffee beans to get from the beans container to the grinder which is placed below the beans container. Also the housing is provided with a housing aperture which corresponds with the aperture of the container in a position in which the container is mounted into the housing. The aperture cover is a part of the coffee beans container and its function is to cover the aperture when the coffee beans container is outside the housing. The positive effect is that such solution provides an automatic cover for the aperture during the inserting or detaching the container from the housing. The risk of falling out of the coffee beans is eliminated for the comfort of the user.

In the preferred embodiment of the invention the aperture cover is slidably mounted with the coffee beans container. The aperture cover is an element of rectangular, flat shape which is slidably mounted with the coffee beans container. The shape of the aperture cover depends on the shape of the container. The aperture cover covers the aperture of the container when the container is outside the housing. During inserting the container into the housing at the beginning the spring blocks the aperture cover and the container starts to move into the housing. The aperture is gradually uncovered and in end position the aperture aligns with the housing aperture so the coffee beans can easily reach the coffee grinder placed below apertures.

In the preferred embodiment of the invention the housing of the coffee beans container has at least one locking element which is pivotably mounted with the housing. Preferably the coffee beans container has two locking elements on both sides of the container for better user impression about the device. The locking element is pivotably mounted with the housing in order to provide movement of the locking element. The geometry of the locking element is designed in such a way to provide a smooth operation between the locking element, spring and the aperture cover.

In the preferred embodiment of the invention the housing is an integral part of the coffee machine and the coffee beans container is removably mounted with the housing. In the built-in type coffee machines the housing is a part of the coffee machine body in which the coffee beans container is inserted in order to prepare a beverage. The housing is a cavity inside the coffee machine in which the coffee beans container filled up with the coffee beans can be inserted. The coffee beans container can be removed from the housing of the coffee machine in order to fill the coffee beans container with coffee beans.

In the preferred embodiment of the invention the spring blocks the aperture cover in its initial position. The aperture cover is connected with the coffee beans container and is locked with the geometry of the spring. The spring is pushed by the locking element and the aperture cover is released to slide on the spring path. In the end position the spring falls into the spring seating and provides firmly positioning of the coffee beans container inside the housing.

The present invention enables a coffee machine with a coffee beans container module in which the operation of the removable coffee beans container is performed smoothly and in which the risk of malfunction is decreased. The solution provides also a positive user impression that the coffee beans container is firmly positioned in the housing.

The construction of the invention, however, together with additional objects and corresponding advantages will be best understood from the following description of specific embodiments and in connection with the accompanying drawing.

### In the drawing:

- Fig. 1: shows a coffee machine with a coffee beans container module in isometric view
- Fig. 2: shows a housing with the housing aperture in isometric view
- Fig. 3: shows a container in isometric view
- Fig. 4: shows an aperture cover in isometric view
- Fig. 5: shows a part of the housing with a spring path and an opening
- Fig. 6: shows a locking element in isometric view
- Fig. 7: shows a plough geometry in isometric view
- Fig. 8: shows a spring in the end position of the container

In cooperation with attached drawing, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

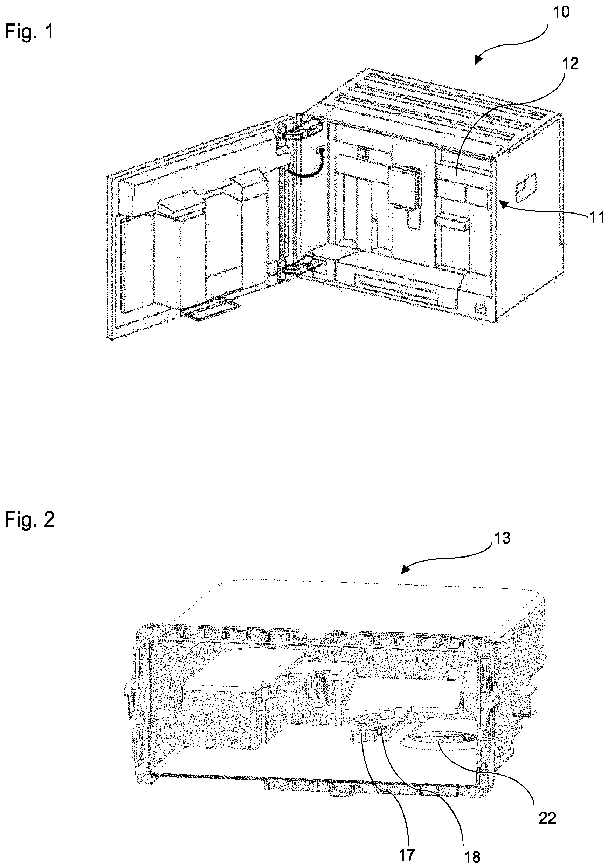

Fig. 1 shows a built-in type coffee machine 10. The coffee machine 10 has a front panel which opens in order to give the user access to the internal components of the coffee machine 10. The coffee machine 10 has a coffee beans container module 11. The coffee beans container module 11 consist of a container 12 and a housing 13. The container 12 is provided to store the coffee beans dedicated

Fig. 2 shows a housing 13 which is an integral part of the coffee machine 10. The housing 13 has a housing aperture 22 which corresponds with the aperture 15 of the container 12 (not shown on the figure). The housing 13 has a spring path 18 for receiving a spring 14 of the container 12 (not shown on the figure). The housing 13 has a locking element 17 which pushes the spring 14 and enables the container 12 to slide in order to be mounted into the housing 13.

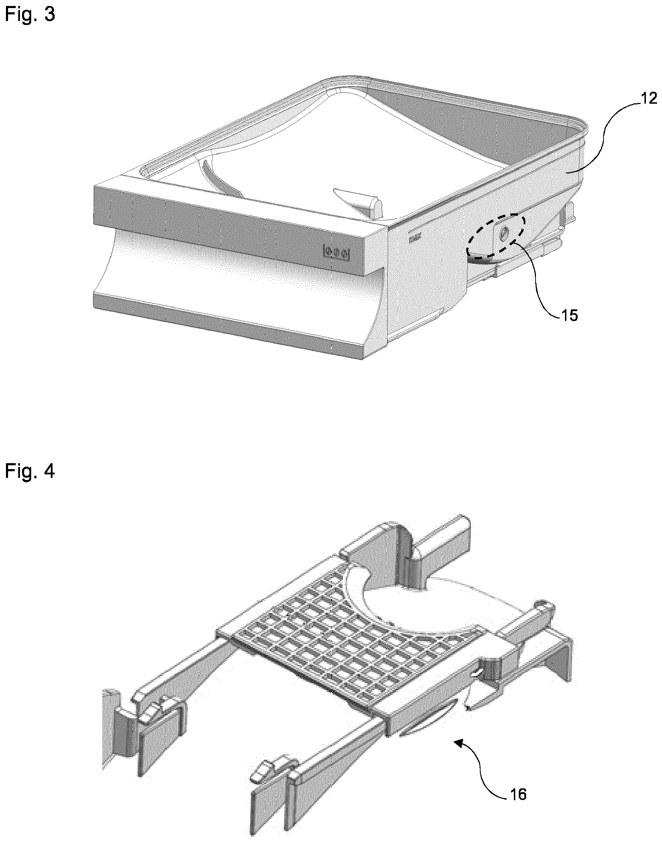

Fig. 3 shows a container 12 for storage of coffee beans. The container 12 is provided to store the coffee beans intended to be grinded in order to prepare a beverage. The container 12 is a kind of a drawer which can be inserted into the housing 13 (not shown on the figure). The container 12 has a gripping portion for handling by the user and the storing portion for storing coffee beans. The container 12 at the bottom wall has an aperture 15 (not shown on the figure) through which the coffee beans enter the coffee grinder.

Fig. 4 shows an aperture cover 16. The aperture cover 16 is slidably mounted with the housing 13. The aperture cover 16 covers the aperture 15 of the container 12 when the container 12 is outside the housing 13. During inserting the container 12 into the housing 13 the aperture 15 is gradually uncovered and in end position of the container 12 the aperture 15 aligns with the housing aperture 22 so the coffee beans can easily reach the coffee grinder placed below apertures (15, 22).

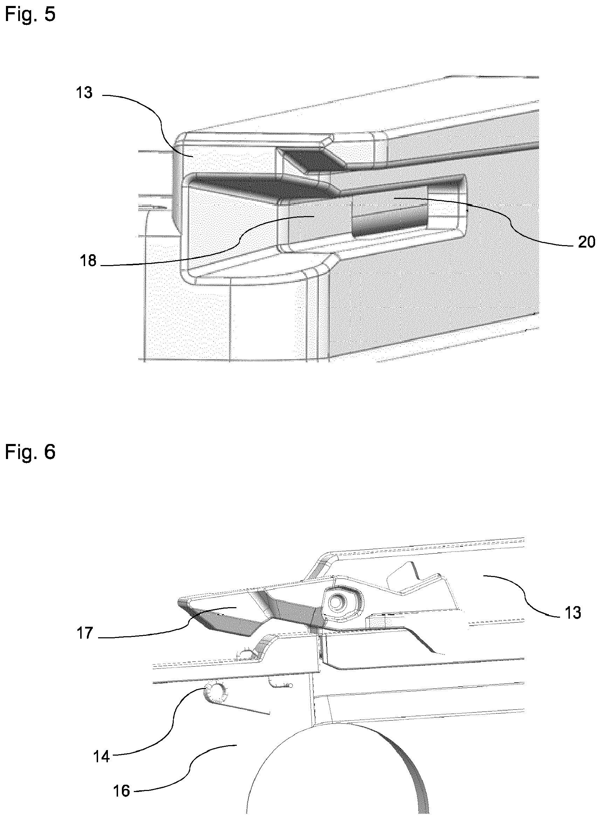

Fig. 5 shows a part of the housing 13 with a spring path 18 and an opening 20. The spring path 18 is a simple rail and its provided to receive the spring 14 which slides on the spring path 18 to reach the opening 20 which is placed at the end of the spring path 18. The spring 14 falls into the opening 20 and the container 12 is firmly mounted with the housing 13. The opening 20 is provided also to enable the obstacles which can appear on the spring path 18 to fall through it and provide a protection against problems with process of mounting of the container 12 with the housing 13.

Fig. 6 shows a locking element 17 in isometric view. The locking element 17 is pivotably mounted with the housing 13. The geometry of the locking element 17 is designed in such a way to enable a smooth cooperation with accompanying elements like the aperture cover 16 and the spring 14.

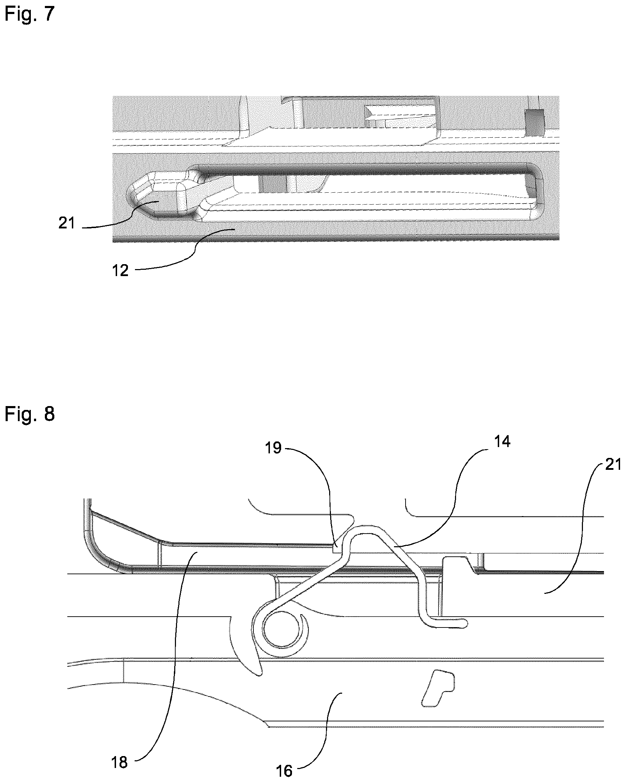

Fig. 7 shows a plough geometry 21. The plough geometry 21 is a simple protrusion and it is placed on the coffee beans container 12 side wall. The plough geometry 21 slides on the spring path 18 and its purpose is to remove the obstacles from the spring path 18. The plough geometry 21 is placed before the spring 14 during inserting the container 12 into the housing 13.

Fig. 8 shows the spring path 18 and the spring 14 in a position when the container 12 is mounted with the housing 13. The spring 14 is placed in a spring seating 19 and the spring seating 19 is provided with an opening 20. The spring seating 19 with the opening 20 are placed at the end of the spring path 18. Thanks to the fact that the spring 14 falls into the spring seating 19 the container 12 is firmly mounted with the housing 13.

The present invention enables a coffee machine with a coffee beans container module in which the operation of the removable coffee beans container is performed smoothly and in which the risk of malfunction is decreased. The solution provides also a positive user impression that the coffee beans container is firmly positioned in the housing.

### REFERENCE SIGNS

- 10: coffee machine
- 11: coffee beans container module
- 12: container
- 13: housing
- 14: spring
- 15: aperture
- 16: aperture cover
- 17: locking element
- 18: spring path
- 19: spring seating
- 20: opening
- 21: plough geometry
- 22: housing aperture

## Claims

1. A coffee machine (10) having a coffee beans container module (11) comprising: a housing (13) with a housing aperture (22) and a spring path (18) and
a coffee beans container (12) with an aperture (15), an aperture cover (16) and a spring (14) **characterized in that** the spring path (18) has an opening (20) and the coffee beans container (12) has a plough geometry (21) for removing obstacles from the spring path (18).

2. The coffee machine (10) according to claim 1, **characterized in that** the spring path (18) has a spring seating (19).

3. The coffee machine (10) according to any of the preceding claims, **characterized in that** the opening (20) is placed in the spring seating (19) at the end of the spring path (18).

4. The coffee machine (10) according to any of the preceding claims, **characterized in that** the aperture cover (16) is slidably mounted with the coffee beans container (12).

5. The coffee machine (10) according to any of the preceding claims, **characterized in that** the housing (13) of the coffee beans container (12) has at least one locking element (17).

6. The coffee machine (10) according to claim 5, **characterized in that** the locking element (17) is pivotably mounted with the housing (13).

7. The coffee machine (10) according to any of the preceding claims, **characterized in that** the housing (13) is an integral part of the coffee machine (10).

8. The coffee machine (10) according to any of the preceding claims, **characterized in that** the coffee beans container (12) is removably mounted with the housing (13).

9. The coffee machine (10) according to any of the preceding claims, **characterized in that** the spring (14) blocks the aperture cover (16) in its initial position.
